**Europäisches Patentamt**

**European Patent Office**

**Office européen des brevets**

(11) Veröffentlichungsnummer: **0 519 285 A2**

## (12) EUROPÄISCHE PATENTANMELDUNG

(21) Anmeldenummer: **92109586.5**

(22) Anmeldetag: **05.06.92**

(51) Int. Cl.5: **H04M 1/72**, H04M 1/64, H04Q 7/04

(30) Priorität: **18.06.91 DE 4120078**

(43) Veröffentlichungstag der Anmeldung: **23.12.92 Patentblatt 92/52**

(84) Benannte Vertragsstaaten: **AT BE CH DE DK ES FR GB GR IT LI LU NL SE**

(71) Anmelder: **SIEMENS AKTIENGESELLSCHAFT Wittelsbacherplatz 2 W-8000 München 2(DE)**

(72) Erfinder: **Fehrmann, Walter, Dipl.-Ing. St. Benedikt Strasse 21 W-8044 Unterschleissheim(DE)** Erfinder: **Hofmann, Jürgen, Dipl.-Ing. (FH) Kapellenstrasse 4 W-8614 Geiselwind(DE)**

(54) **Einrichtung zur Rufumleitung bei einem Mobilfunksystem.**

(57) Eine solche Einrichtung dient dazu, Mobilfunkteilnehmer auch dann erreichen zu können, wenn sie sich nicht in der Nähe vom Teilnehmergerät befinden. Hierzu ist vorgesehen, daß ein oder mehrere feste Ansagetexte unter den Ziffern von 0 bis 9 und Sonderzeichen als Sprachsegmente im Teilnehmergerät einprogrammiert sind und durch Eingabe einer beliebigen Umleitnummer vom Teilnehmer eine für den anrufenden Teilnehmer bestimmte Information (Rufnummer, Mitteilung) eingebbar ist.

FIG 1

EP 0 519 285 A2

Die Erfindung bezieht sich auf eine Einrichtung zur Rufumleitung bei einem Mobilfunksystem. Eine solche soll dazu dienen, Mobilfunkteilnehmer auch dann erreichen zu können, wenn sie sich nicht in der Nähe vom Teilnehmergerät befinden. Ein Mobilfunkteilnehmer kann in diesem Fall unter einer anderen Rufnummer erreichbar sein, die dem Anrufer im allgemeinen jedoch nicht bekannt ist. Das Problem besteht dann darin, eine solche Rufnummer dem Anrufer mitzuteilen.

Die Mitteilung der Rufnummer an den Anrufer könnte beispielsweise in der Weise erfolgen, daß an das Mobilfunkgerät ein Anrufbeantworter angeschlossen wird, der beliebige Ansagetexte aufnehmen und wiedergeben kann. Von Nachteil sind hierbei jedoch die hohen Anschaffungskosten des Anrufbeantworters.

Auch eine Anrufumleitung, die selbständig den Mobilfunkteilnehmer unter einer hinterlegten Rufnummer anruft, stellt keine optimale Lösung des Problems dar. Nachteilig sind dabei die hohen Bereitstellungskosten und die hohen Gesprächsgebühren, da für das umgeleitete Gespräch die normalen Funktelefongebühren zu entrichten sind, auch wenn das umgeleitete Gespräch im normalen Drahttelefonnetz erfolgt.

Der Erfindung liegt die Aufgabe zugrunde, eine Lösung anzugeben, mit der eine Erreichbarkeit eines solchen Mobilfunkteilnehmers in einfacher Weise möglich ist.

Diese Aufgabe wird gemäß der Erfindung in der Weise gelöst, daß ein oder mehrere feste Ansagetexte unter den Ziffern von 0 bis 9 und Sonderzeichen als Sprachsegmente im Teilnehmergerät einprogrammiert sind und durch Eingabe einer beliebigen Umleitnummer vom Teilnehmer eine für einen anrufenden Teilnehmer bestimmte Information (Rufnummer, Mitteilung) eingebbar ist.

Vorteilhafte Ausgestaltungen und Weiterbildungen des Erfindungsgegenstandes sind in den Unteransprüchen angegeben.

Nachstehend wird die Erfindung anhand zweier in der Zeichnung dargestellter Ausführungsbeispiele näher erläutert.

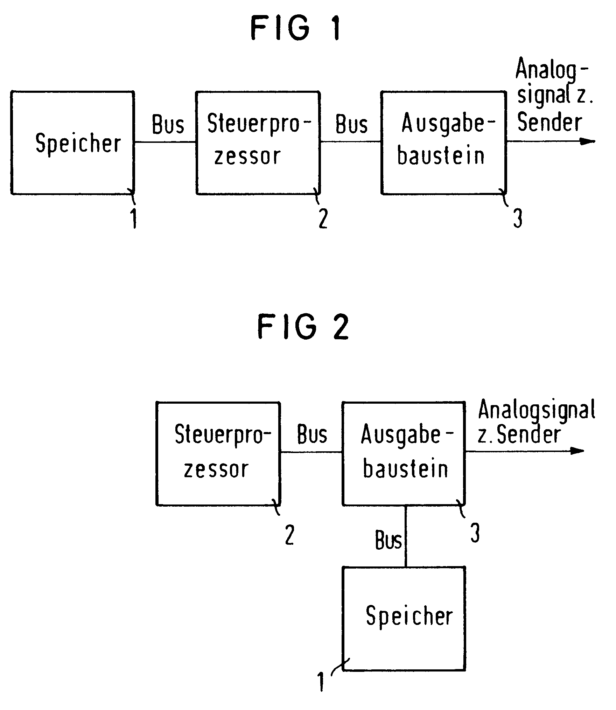

Die Figuren 1 und 2 zeigen eine Rufumleitung im Blockschaltbild, die aus jeweils drei Funktionsblöcken besteht. Dies sind ein Speicherbaustein 1, der die Speicherdaten enthält und sowohl als flüchtiger als auch nichtflüchtiger Speicher ausgeführt sein kann, ein Steuerprozessor 2, der alle Informationen, die für das Auslesen der im Speicher 1 abgelegten Sprachsegmente nötig sind (Länge der Sprachsegmente, Adresse der Sprachsegmente, Anordnung etc.) enthält und die Ausgabe der Daten steuert und ein Ausgabebaustein 3, der die Umwandlung der digitalten Daten in analoge Signale vornimmt. Mögliche Realisierungsformen sind z.B. Signalprozessor mit D/A-Wandler, Sprachausgabebaustein oder ein einfacher D/A-Wandler. Der Ausgabebaustein kann bei einem System mit digitaler Übertragung entfallen, da die Wiederherstellung der Sprache aus den Daten in der Feststation erfolgt.

Alle drei Komponenten sind über einen oder mehrere Busse verbunden, wobei die Busse sowohl seriell (Figur 1) als auch parallel (Figur 2) ausgeführt sein können. Es besteht auch die Möglichkeit, die drei Einzelkomponenten miteinander zu integrieren.

Ein oder mehrere feste Ansagetexte sind unter den Ziffern von 0 bis 9 und Sonderzeichen ( = oder *) als Sprache im Teilnehmergerät fest einprogrammiert. Durch Eingabe einer beliebigen "Umleitnummer", d.h. Betätigen der entsprechenden Ziffern- bzw. Symboltaste, kann der Teilnehmer diejenige Nummer programmieren, unter der er momentan erreichbar ist. Bei einem Anruf wird zunächst gewartet, ob der Teilnehmer evtl. schon zurückgekehrt ist und falls nicht, wird automatisch der Ansagetext mit der Rufnummer, unter der der Teilnehmer erreichbar ist, als Sprachtext ausgegeben. Der Anrufer kann dann leicht den Teilnehmer unter der Umleitnummer erreichen. Der feste Ansagetext kann auch einen Hinweis enthalten, wo sich der Mobilfunkteilnehmer befindet (z.B. "Bin im Büro") oder wohin sich der Anrufer wenden soll (z.B. "Bitte wählen Sie meinen Cityruf an"). In der Bedienung ist eine Automatik vorgesehen, die beim Ausschalten der Zündung des Autos sofort die Umleitansage aktiviert.

Im folgenden wird die Funktionsweise der Schaltungen für die Rufumleitung erläutert: Die digital codierten Sprachdaten sind im Speicher 1 der Anordnung abgelegt und werden im Falle der Ausführungsform nach Figur 1 mit in Serie liegenden Funktionsblöcken vom Steuerprozessor 2 (Hauptprozessor) gelesen und zum Ausgabebaustein 3 weitergegeben. Im Falle der Ausführungsform nach Figur 2, bei der Speicher 1 und Steuerprozessor 2 direkt mit dem Ausgabebaustein 3 verbunden sind, gibt der Steuerprozessor 2 den Ausgabebefehl an den Ausgabebaustein 3, der sich die Daten direkt aus dem Speicher 1 liest. Der Ausgabebaustein 3 übernimmt in beiden Fällen dann die Auswertung der Daten und die nachfolgende Wandlung in analoge Sprache. Das analoge Sprachsignal wird dann dem Sender des Teilnehmergerätes zugeführt, die Sprachinformation somit dem Anrufer mitgeteilt.

Bei digitalen Übertragungssystemen werden im Gegensatz zu den analogen Systemen mit analoger Sprachübertragung nur die digitalen Sprachdaten, in denen die Sprache verschlüsselt ist, übertragen. In der Feststation werden dann anschließend diese Daten in Sprachinformation zurückgewandelt. In diesem Fall kann der Ausgabebaustein entfallen;

es müssen nur die codierten Daten der Feststation übermittelt werden.

**Patentansprüche**

1. Einrichtung zur Rufumleitung bei einem Mobilfunksystem,
   **dadurch gekennzeichnet,** daß ein oder mehrere feste Ansagetexte unter den Ziffern von 0 bis 9 und Sonderzeichen als Sprachsegmente im Teilnehmergerät einprogrammiert sind und durch Eingabe einer beliebigen Umleitnummer vom Teilnehmer eine für einen anrufenden Teilnehmer bestimmte Information (Rufnummer, Mitteilung) eingebbar ist.

2. Einrichtung nach Anspruch 1,
   **dadurch gekennzeichnet,** daß die Sprachsegmente (digital codierte Sprachdaten) für die Rufumleitung in einem Speicher abgelegt sind, der über Datenbusse mit einem alle für das Auslesen der im Speicher abgelegten Sprachsegmente nötigen Informationen enthaltenden, die Ausgabe der Daten steuernden, Steuerprozessor und mit einem Ausgabesystem verbunden ist, in dem die Auswertung der Daten und nachfolgende Umwandlung digitaler Daten in analoge Sprachsignale erfolgt, die dem Sender des Teilnehmergerätes zugeführt wird.

3. Einrichtung nach Anspruch 1 oder 2,
   **gekennzeichnet** durch eine Automatik, die beim Ausschalten der Zündung des Autos sofort die Umleitansage aktiviert.

4. Einrichtung nach einem der Ansprüche 1 bis 3,
   **dadurch gekennzeichnet,** daß bei einem Anruf ohne Teilnehmermeldung der Ansagetext nach einer bestimmten Wartezeit automatisch ausgegeben wird.

## FIG 1

Speicher — Bus — Steuerprozessor — Bus — Ausgabebaustein → Analogsignal z. Sender

1     2     3

## FIG 2

Steuerprozessor — Bus — Ausgabebaustein → Analogsignal z.Sender

2     Bus     3

Speicher

1